**Europäisches Patentamt**

**European Patent Office**

**Office européen des brevets**

(19)

(11) Veröffentlichungsnummer: **0 289 532 B1**

(12) **EUROPÄISCHE PATENTSCHRIFT**

(45) Veröffentlichungstag der Patentschrift:
10.07.91 Patentblatt 91/28

(51) Int. Cl.⁵ : **G11B 33/08**

(21) Anmeldenummer: **87906661.1**

(22) Anmeldetag : **07.10.87**

(86) Internationale Anmeldenummer :
**PCT/EP87/00580**

(87) Internationale Veröffentlichungsnummer :
**WO 88/03316 05.05.88 Gazette 88/10**

(54) **ELASTISCHER GERÄTEFUSS.**

(30) Priorität : **22.10.86 DE 3635917**

(43) Veröffentlichungstag der Anmeldung :
**09.11.88 Patentblatt 88/45**

(45) Bekanntmachung des Hinweises auf die
Patenterteilung :
**10.07.91 Patentblatt 91/28**

(84) Benannte Vertragsstaaten :
**AT BE CH DE FR GB IT LI LU NL SE**

(56) Entgegenhaltungen :
**WO-A-87/00337
DE-A- 3 439 614
DE-U- 7 627 414
GB-A- 662 260**

(56) Entgegenhaltungen :
**GB-A- 690 443
GB-A- 831 473
US-A- 2 572 718
US-A- 2 641 434
US-A- 2 743 892
US-A- 3 601 345
Patents Abstracts of Japan, Band 2, Nr. 49, 6.
April 1978, S 777E78 & JP, A, 5312304 (Matsushita Denki Sangyo K.K.) 3. Febr. 1978**

(73) Patentinhaber : **Deutsche Thomson-Brandt
GmbH
Hermann-Schwer-Strasse 3 Postfach 1307
W-7730 Villingen-Schwenningen (DE)**

(72) Erfinder : **CASPERS, Johannes
An der Kapelle 1
W-7730 Villingen-Schwenningen (DE)**

## Beschreibung

Die Erfindung betrifft einen elastischen Gerätefuß für Geräte der Unterhaltungselektronik, insbesondere CD-Spieler, der aus einem runden Gummiteil besteht, dessen Querschnitt schüsselförmig gewölbt ist.

Ein solcher Gerätefuß ist aus der DE-A-35 22 842 (eröffentlicht am 02.01.87) und der WO88/03316 (Stand der Technik nach Art 54 (3)) bekannt, wobei davon ausgegangen wurde, daß Gehäuse von CD-Spielern mit elastischen Füßen zu versehen, um so eine Entkopplung von Trittschall und/oder anderen Beschleunigungskräften zu bewirken. Elastizität und Dämpfung der einzelnen Füße werden dabei so dimensioniert, daß bei den maximal vorkommenden Beschleunigungsamplituden unter Berücksichtigung der Frequenz keine Beeinträchtigung der Wiedergabe erfolgt.

Bei der Anwendung von derartigen Gerätefüßen kann bei dem übereinanderstellen von mehreren Geräten auf dem CD-Spieler der Fall eintreten, daß die Geräte durch unsymmetrische Belastung der Gerätefüße des CD-Spielers nicht gerade aufeinanderstehen. Das kann der Fall sein, wenn Netzteile eines oder mehrerer einen Turm bildenden Geräte auf einer Seite sind. Derart belastete Gerätefüße werden mehr zusammengepreßt als die weniger belasteten und als Folge davon kann der Turm schief stehen. Leider ergibt das nicht nur einen optisch unschönen Anblick. Bei der Betätigung von Bedienungselementen der Geräte stört die Unstabilität, insbesondere der oberen Geräte.

Deshalb lag dieser Erfindung die Forderung zugrunde, die Stabilität bei unsymmetrischen Belastungen der vier Füße eines CD-Spielers und auch bei gleichmäßiger Belastung zu verbessern bei gleichbleibenden Rückstellkonstanten.

Nun ist es nicht vorherzusehen, wie der Besitzer einen CD-Spieler mit anderen Geräten kombiniert aufbaut. Deshalb sollte eine flexible Lösung des Problems gesucht werden.

Gelöst wird die gestellte Aufgabe für einen elastischen Gerätefuß nach der vorliegenden Erfindung durch die im Anspruch 1 aufgeführten Merkmale.

Weiterbildungen und Einzelheiten der Erfindung sind den Unteransprüchen und der Beschreibung zu entnehmen.

Die Verwendung der Versteifungsringe bringt die geforderte Verbesserung der Stabilität und nachdem sie auch wahlweise vom Gerätebenutzer oder -aufsteller nachträglich angebracht oder entfernt werden können, ist der Ausgleich von Unsymmetrien und dadurch verursachten Schiefstehen leicht möglich.

Nachfolgend wird ein Ausführungsbeispiel der Erfindung an hand der Zeichnung beschrieben. Diese zeigt in

Figur 1 in perspektivischer Ansicht schräg von unten und auseinander gezogen das Gummiteil und einen Versteifungsring ;

Figur 2 Gummiteil und Versteifungsring aneinander gesteckt in einer in zwei verschiedenen Ebenen geschnittenen Seitenansicht.

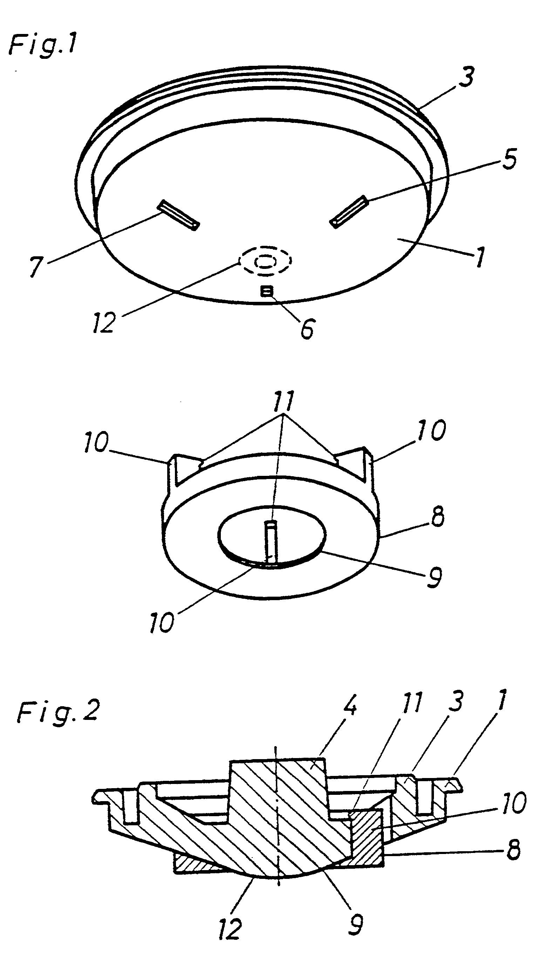

Das Gummiteil besitzt, die in Figur 1 zu erkennen, drei rechteckige, gleichmäßig beabstandete und radial verlaufende Öffnungen 5, 6, 7, die zur Aufnahme der Zapfen 10 eines Versteifungsringes 8 geeignet sind. Nasen 11 an den Zapfen 10 hintergreifen an den öffnungen 5, 6, 7 das elastische Material des Gummiteils 1 und lassen den Versteifungsring 8 nach dem Andrücken fest sitzen, erlauben aber auch das Abnehmen je nach Bedarf. Die mittlere Wölbung 12 des Gummiteils 1 ragt durch die zentrale öffnung 9. Im unbelasteten Zustand des CD-Spielers allein ist dies aus Figur 2 ersichtlich. Bei Belastung drückt sich das Gummiteil 1 zusammen (nicht gezeigt in Zeichnung) und es gelangt die plane Unterseite des Versteifungsringes 8 zur zusätzlichen Auflage.

Wenn keine zusätzlichen Belastungen vorliegen, sind die Verhältnisse wie in der WO 88/03316 angegeben. Bei zusätzlicher Belastung bleiben die dort angegebenen Werte bezüglich der Rückstellkonstanten etwa gleich, durch die angesetzten Versteifungsringe ergibt sich eine verbesserte Stabilität durch die größeren Auflageflächen.

## Patentansprüche

1. Elastischer Gerätefuß für Geräte der Unterhaltungselektronik, insbesondere CD-Spieler, der aus einem runden Gummiteil (1) besteht, dessen Querschnitt schüsselförmig gewölbt ist und an seinem oberen Rand mindestens einen umlaufenden Wulst (3) zur Halterung und Abstützung am Geräteboden (2) aufweist und dessen Höhe sich bei Belastung verringert, indem die Form elastisch verändert wird, wobei der Gerätefuß eine übernahmeelastizität in Form eines im Inneren der Schüssel angeformten und sich in Richtung zum Geräteboden (2) erstreckenden Stempel (4) aufweist, wobei die Höhe des Stempels (4) derart bemessen ist, daß in unbelastetem Zustand des Fußes die Stempeloberkante einen Abstand (a) zum Geräteboden (2) aufweist, welche übernahmeelastizität ab der Schwellwertbelastung, wobei der Abstand (a) null ist, wirksam wird und dafür sorgt, daß die Rückstellkonstante $R_K = \frac{1}{C}$, wobei C die Elastizität ist, bei steigender Belastung oberhalb des Schwellwertes stetig zunimmt und wobei die Resonanzfrequenz $f_R$, die bestimmt wird durch die Masse M des Gerätes bzw. der Geräte und die Elastizität C, etwa konstant bleibt und wobei ein Versteifungsring (8) von unten gegen das Gummiteil (1) steckbar vorgesehen ist, der so ausgebildet ist, daß die mittlere Wölbung (12) dieses Gummiteils (1) durch die zentrale öffnung (9) des Versteifungsringes (8) hindurchragt und dabei außerhalb der Wölbung (12) an dem Innenrand der öffnung (9) anliegt und daß am Versteifungsring (8) etwa parallel zur gedachten Mittelachse einseitig Zapfen (10) angeformt sind, die in korrespondierende öffnungen (5, 6, 7) des Gummiteils (1) passen.

2. Elastischer Gerätefuß gemäß Anspruch 1, **dadurch gekennzeichnet**, daß im Gummiteil (1) in gleichem Abstand voneinander drei radial verlaufende, rechtekkige Durchbrüche (5, 6, 7) für das Anstecken des Versteifungsringes (8) vorgesehen sind, dessen Zapfen (10) passende Form, Position und Länge aufweisen.

3. Elastischer Gerätefuß gemäß Anspruch 2, **dadurch gekennzeichnet**, daß die Zapfen (10) mit radial nach innen und/oder außen angeformten Nasen (11) versehen sind, um selbsthaltend einschnappen zu können.

4. Elastischer Gerätefuß gemäß Anspruch 1, **dadurch gekennzeichnet**, daß der Versteifungsring (8) aus einem wenig elastischen Material besteht.

5. Elastischer Gerätefuß gemäß Anspruch 1, **dadurch gekennzeichnet**, daß der Versteifungsring (8) aus Kunststoff hergestellt ist.

## Claims

1. A resilient apparatus foot for apparatus in entertainment electronics, more particularly compact disc players, which comprises a round rubber part (1) of which the cross section is curved so that the part is dish-shaped and which has on its top edge at least one peripheral bulge (3) for holding and support on the bottom (2) of the apparatus, and of which the height is reduced, when loaded, because the shape is resiliently changed, and the apparatus foot has a takeover elasticity in the form of a post (4) formed inside the dish and extending in the direction towards the bottom (2) of the apparatus, and the height of the post is made such that in the loaded state of the post the top edge of the post is at a distance (a) from the bottom (2) of the apparatus, which transfer elasticity becomes effective, starting from the threshold loading, when the distance (a) is zero, and ensures that the restoration constant $R_K = 1/c$, where C is the elasticity, continuously increases in the case of a load continuously in creasing above the threshold value, and the resonance frequency $f_R$, which is determined by the mass of the apparatus or the apparatuses and the elasticity C, remains approximately constant, and a stiffening ring (8) is provided which can be inserted into the rubber part (1) from below and which is so formed that the central curved part of this rubber part projects through the central opening (9) of the stiffening ring (8) and then bears against the inner edge of the opening (9) outside the curved part, and that lugs (10) are formed on the stiffening ring (8) approximately parallel to the conceptual axis on one side, and fit into corresponding openings in the rubber part (1).

2. A resilient apparatus foot according to claim 1, characterised in that three radially extending rectangular through openings (5, 6, 7) are provided in the rubber part (1), at equal intervals from one another, for the insertion of the stiffening ring of which the lugs correspond to the openings in form, position and length.

3. A resilient apparatus foot according to claim 2, characterised in that the lugs (10) are formed with radial inward and/or outward projections (11) to enable them to snap in resiliently and hold.

4. A resilient apparatus foot according to claim 1, characterised in that the stiffening ring (8) consists of only slightly resilient material.

5. A resilient apparatus foot according to claim 1, characterised in that the stiffening ring (8) is made from plastics.

## Revendications

1. Pied élastique pour des appareils de l'électronique grand public, notamment des tournes-disques CD, constitué par une partie circulaire (1) en caoutchouc dont la section est bombée en forme de clé et qui comporte à son bord supérieur au moins un bourrelet circulaire (3) pour supporter et soutenir le fond (2) de l'appareil et dont la hauteur diminue en cas de charge par une modification élastique de sa configuration, le pied d'appareil présentant une élasticité de transfert sous la forme d'un poinçon (4) moulé à l'intérieur des clés et s'étendant par rapport au fond (2) de l'appareil, la hauteur du poinçon (4) étant dimensionnée de manière que son bord supérieur présente un écart (a) par rapport au fond (2) de l'appareil à l'état non chargé du pied, dont l'élasticité de transfert devient active à partir d'une valeur seuil de la charge, l'écart (a) étant alors nul, et assure que la constante des forces antagonistes $R_K = \dfrac{1}{C}$, ou C est l'élasticité, augmente constamment en cas de charge croissante au-dessus de la valeur seuil, la fréquence de résonnance $f_R$ qui est déterminée par la masse M de l'appareil et/ou des appareils et l'élasticité C, restant constante, alors qu'un anneau raidisseur (8) est emboîtable par le bas sur la pièce (1) en caoutchouc, est conçu de telle manière que le bombement médian (12) de cette pièce (1) en caoutchouc est en saillie à travers l'ouverture centrale (9) de l'anneau raidisseur (8) et vient en appui contre le bord intérieur de l'ouverture (9) en dehors du bombement (12) et que des tenons (10) qui s'engagent dans des ouvertures correspondantes (5, 6, 7) de la pièce (1) en caoutchouc, sont moulés d'un côté sur l'anneau raidisseur (8) parallèlement à l'axe médian imaginaire.

2. Pied élastique selon la revendication 1, caractérisé en ce que trois ouvertures (5, 6, 7) rectangulaires, s'étendant radialement et écartées d'une distance égale les unes des autres, sont ménagées dans la pièce (1) en caoutchouc pour emboîter l'anneau raidisseur (8) dont les tenons (10) ont la forme, la position et la longueur appropriées.

3. Pied élastique selon la revendication 2, caractérisé en ce que les tenons (10) sont munis d'ergots (11) moules radialement vers l'intérieur et/ou vers l'extérieur pour pouvoir s'encliqueter par auto-maintien.

4. Pied élastique selon la revendication 1, caractérisé en ce que l'anneau raidisseur (8) est constitué dans une matière faiblement élastique.

5. Pied élastique selon la revendication 1, caractérisé en ce que l'anneau raidisseur (8) est en matière synthétique.

Fig.1

Fig.2